(19) Europäisches Patentamt
European Patent Office
Office européen des brevets

(11) **EP 3 727 970 B1**

(12) **FASCICULE DE BREVET EUROPEEN**

(45) Date de publication et mention de la délivrance du brevet:
**02.02.2022 Bulletin 2022/05**

(21) Numéro de dépôt: **18825983.2**

(22) Date de dépôt: **18.12.2018**

(51) Classification Internationale des Brevets (IPC):
**B60W 10/06** (2006.01)   **B60W 30/188** (2012.01)
**B60W 50/08** (2020.01)   **B60W 40/076** (2012.01)
**B60W 40/13** (2012.01)

(52) Classification Coopérative des Brevets (CPC):
**B60W 10/06; B60W 30/188; B60W 40/076;**
**B60W 40/13; B60W 50/082;** B60W 2050/0024;
B60W 2530/10; B60W 2540/10; B60W 2540/215;
B60W 2552/15; B60W 2710/0666; B60W 2720/106

(86) Numéro de dépôt international:
**PCT/EP2018/085407**

(87) Numéro de publication internationale:
**WO 2019/121624 (27.06.2019 Gazette 2019/26)**

(54) **PROCEDE DE DETERMINATION DE LA CONSIGNE DE COUPLE D'UN MOTEUR DE VEHICULE AUTOMOBILE**

VERFAHREN ZUR BESTIMMUNG DES MOTOR-SOLLMOMENTS EINES KRAFTFAHRZEUGS

METHOD FOR DETERMINING TARGET TORQUE OF A VEHICLE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762832**

(43) Date de publication de la demande:
**28.10.2020 Bulletin 2020/44**

(73) Titulaire: **Renault S.A.S.**
**92100 Boulogne-Billancourt (FR)**

(72) Inventeurs:
• **JOURDET, Emmanuel**
  **91650 BREUILLET (FR)**
• **BRACONOT, Cindy**
  **91300 MASSY (FR)**
• **THUILLIER, Laurent**
  **91220 Brétigny sur orge (FR)**

(56) Documents cités:
**EP-A1- 1 348 851     EP-A2- 1 045 121**
**DE-A1- 19 933 010     FR-A1- 2 875 200**
**US-A- 4 720 793**

**Description**

DOMAINE TECHNIQUE DE L'INVENTION

L'invention concerne un procédé de détermination de la consigne de couple d'un moteur équipant un véhicule automobile. Elle trouve une application particulièrement avantageuse dans le cas d'un moteur à combustion interne de faible cylindrée, notamment du type suralimenté, fonctionnant dans le domaine atmosphérique à bas régime et délivrant un couple relativement faible.

ETAT DE LA TECHNIQUE

Le conducteur d'un véhicule automobile dispose d'une pédale d'accélérateur qui sert, par un enfoncement plus ou moins marqué, à créer une consigne de couple moteur apte à entraîner le véhicule. Dans l'état de la technique, un calculateur du moteur a en mémoire une cartographie qui se présente par exemple sous la forme de table, dont les entrées sont la valeur du régime moteur et l'enfoncement de la pédale, et dont la sortie est la consigne de couple associée audit régime et audit enfoncement. Le calculateur est ensuite apte à commander des actionneurs du moteur, par exemple des actionneurs commandant le circuit d'air et le circuit de carburant du moteur, de manière que le moteur délivre le couple prévu pour les valeurs correspondantes de régime et d'enfoncement de la pédale, en réalisant la combustion d'une quantité d'air et d'une quantité de carburant prédéterminées par la position des actionneurs.

Plus précisément, l'enfoncement de la pédale d'accélérateur représente la volonté du conducteur d'obtenir une accélération donnée du véhicule. En effet, d'après le principe fondamental de la dynamique, le produit de la masse du véhicule par son accélération est égal à la force d'entraînement du véhicule diminuée de la somme des forces résistantes qui sont appliquées au véhicule. La force d'entraînement, qui est égale à la force appliquée aux roues motrices du véhicule, provient du couple moteur qui est transmis auxdites roues par l'intermédiaire de la chaîne de transmission du véhicule (c'est-à-dire par la boîte de vitesses et le pont du véhicule). Les forces résistantes sont constituées de toutes les forces qui s'opposent au mouvement du véhicule, notamment des forces aérodynamiques (ou : traînée), des forces de résistance au roulement, d'autres forces telles que par exemple des frottements internes au véhicule, et le cas échéant des forces liés à la gravité lorsque le véhicule se déplace sur une pente montante (étant entendu que si la pente est descendante, la force de gravité n'est pas résistante).

Si le couple moteur est tel que la force d'entraînement compense exactement les forces résistantes, l'accélération est nulle, et la vitesse du véhicule est constante. Pour la position de la pédale d'accélérateur qui correspond à ce couple, la volonté du conducteur se traduit par une vitesse constante. En revanche, si le conducteur enfonce davantage la pédale d'accélérateur, le couple moteur est plus élevé, ce qui se traduit par une force d'entraînement supérieure aux forces résistantes et par une accélération (positive) du véhicule. Inversement, si le conducteur enfonce moins la pédale d'accélérateur, le couple moteur est plus faible, ce qui se traduit par une force d'entraînement inférieure aux forces résistantes et par une décélération du véhicule.

Par des essais préalables du véhicule, ledit véhicule présentant une masse de référence prédéterminée, et lesdits essais étant conduits sur une route plate de manière à éliminer les efforts liés à la gravité, on peut déterminer la valeur du couple moteur qui permet de maintenir constante chaque valeur de vitesse possible du véhicule, ladite vitesse étant reliée à la valeur du régime moteur par le rapport de transmission du véhicule (boîte de vitesses et pont) et le rayon des roues. La valeur de couple est ensuite traduite en force d'entraînement du véhicule, auquel elle est reliée par le rapport d'entraînement du véhicule et le rendement de la chaîne de transmission. On en déduit la valeur des forces résistantes appliquées au véhicule, comme étant égale à valeur de ladite force d'entraînement, puisque l'accélération est nulle, et on stocke les différentes valeurs de forces résistantes dans une mémoire du calculateur du moteur.

On peut alors calibrer la progressivité de la pédale d'accélérateur du véhicule. Par progressivité, on entend l'allure plus ou moins pentue d'une courbe qui représente la consigne de couple moteur en fonction de l'enfoncement de la pédale d'accélérateur, pour un régime donné du moteur. La consigne de couple est une fonction croissante de l'enfoncement, qui peut présenter un taux de variation (progressivité) plus ou moins marquée selon le type d'agrément qu'on souhaite donner au véhicule, c'est-à-dire selon le caractère plus ou moins dynamique.

On choisit, pour une valeur de régime moteur donnée, une valeur d'enfoncement de la pédale qui permet de maintenir la vitesse du véhicule constante, et donc une accélération nulle du véhicule à cette vitesse. On détermine aussi, pour toutes les autres valeurs de position de la pédale d'accélérateur autour de cette position d'accélération nulle, c'est-à-dire entre la position complètement relâchée et la position complètement enfoncée, les valeurs de consigne couple qui permettront d'obtenir des valeurs d'accélération du véhicule données. Chacune de ces valeurs de couple peut être déduite, toujours par le principe fondamental de la dynamique, de la valeur de l'accélération qui est visée pour chaque position d'enfoncement considéré et des forces résistantes qui ont été calculés précédemment pour la valeur de l'enfoncement pédale d'accélération nulle.

Inversement, lors du fonctionnement normal du véhicule, pour une valeur donnée du régime moteur et une valeur donnée d'enfoncement de la pédale d'accélérateur, le calculateur du moteur détermine la consigne de couple correspondante qui a été stockée en mémoire dans une table.

On comprend néanmoins de ce qui précède que les différentes valeurs calibrées d'enfoncement de la pédale d'accélérateur ne permettent d'obtenir les différentes valeurs d'accélération prévues que dans la mesure où la masse du véhicule est égale à la masse de référence à laquelle les essais préalables sont menés et que le véhicule roule sur une route plate.

Si tel n'est pas le cas, c'est-à-dire si le véhicule est plus lourd que sa masse de référence et/ou si il gravit une pente montante, alors l'accélération réellement obtenue est plus faible pour un enfoncement de la pédale identique, car :

- d'une part les forces résistantes appliqués au véhicule sont plus élevés, ce qui se traduit par une différence plus faible entre la force d'entraînement et les forces résistantes, donc par un produit de la masse par l'accélération qui est également plus faible ;
- d'autre part, la valeur de la masse qui intervient dans ledit produit de la masse par l'accélération (i.e. la variation de la quantité de mouvement) est plus élevée, ce qui rend la valeur de l'accélération encore plus faible.

Afin de maintenir une accélération constante à l'attaque d'une pente montante, le conducteur aura donc naturellement tendance à appuyer davantage sur la pédale d'accélérateur, de manière à créer un couple moteur supplémentaire apte à vaincre la force résistante supplémentaire liée à la pente. De la même manière, si la masse du véhicule est plus importante que la masse de référence, par exemple si le conducteur attèle une remorque au véhicule, il aura ensuite tendance de manière naturelle à appuyer davantage que d'habitude sur la pédale d'accélérateur, pour obtenir la même accélération qu'il souhaitait dans des conditions de charge moindre et qu'il obtenait avec un enfoncement moindre de la pédale. Dans certains cas, pour maintenir un niveau d'accélération convenable, le conducteur pourra être amené à enfoncer complètement la pédale d'accélérateur.

Il en résulte une perte d'agrément du véhicule, tant en ce qui concerne le brio que le dynamisme. Le conducteur en retire une sensation d'amoindrissement des performances du moteur en fonction des contraintes de roulage, c'est-à-dire de la pente et du chargement du véhicule. Cette sensation est d'autant plus marquée que le moteur délivre un couple relativement faible, notamment dans le cas d'un moteur suralimenté de faible cylindrée du type de ceux qui ont été mis sur le marché ces dernières années pour limiter les pertes par pompage

On connaît de l'état de la technique plusieurs procédés qui visent à résoudre le problème d'enfoncement de la pédale d'accélérateur qui vient d'être décrit. Notamment, la publication FR-A1-2995399 de la demanderesse divulgue un procédé d'estimation de la charge d'un véhicule automobile équipé d'une transmission automatique, qui permet d'optimiser le fonctionnement du groupe motopropulseur. Un tel procédé permet de piloter la transmission automatique en fonction du chargement. On comprend qu'on vise plutôt à adapter les changements de rapport de la transmission automatique, ce qui se traduit par une modification du comportement du véhicule qui est perceptible par le conducteur.

On connaît aussi de l'état de la technique les publications EP-A1-1045121, FR-A1-2875200, DE-A1-19933010, US-A-4720793 et EP-A1-1348851, qui décrivent des procédés dans lesquels on détermine une consigne de couple d'un moteur de véhicule automobile, comprenant des étapes au cours desquelles : on détermine une valeur de l'enfoncement d'une pédale d'accélérateur du véhicule ; on détermine une valeur du régime du moteur ; et, on détermine ladite consigne de couple à partir d'un ensemble de paramètres comprenant au moins ladite valeur de l'enfoncement de la pédale d'accélérateur et ladite valeur de régime du moteur.

RESUME DE L'INVENTION

L'invention propose de remédier de manière simple aux problèmes d'enfoncement de la pédale d'accélérateur décrits précédemment tout en évitant les modifications de comportement du véhicule perceptibles par le conducteur du véhicule tels qu'un changement de rapport de boîte de vitesses.

Elle propose pour cela un procédé de détermination de la consigne de couple d'un moteur de véhicule automobile, comprenant des étapes au cours desquelles :

- On détermine une valeur de l'enfoncement d'une pédale d'accélérateur du véhicule par un conducteur du véhicule ;
- On détermine une valeur du régime du moteur ; et,
- On détermine ladite consigne de couple à partir d'un ensemble de paramètres comprenant au moins ladite valeur d'enfoncement de la pédale et ladite valeur de régime.

Le procédé selon l'invention est caractérisé en ce que ladite consigne de couple est déterminée comme étant égale la somme :

- d'une première valeur de couple moteur, déterminée en fonction de la valeur de l'enfoncement de la pédale d'accélérateur par le conducteur et du régime du moteur, ladite première valeur étant apte à accélérer le véhicule à une valeur d'accélération de référence prédéterminée lorsque la masse du véhicule est égale à une masse de référence prédéterminée et que le véhicule se déplace sur une route présentant une pente nulle ; et,

- de tout ou partie d'une valeur de couple différentiel, déterminé en fonction de la masse courante réelle du véhicule et de la pente courante réelle de la route sur laquelle le véhicule se déplace, ledit couple différentiel étant déterminé de manière que, lorsque le couple moteur est égal à la somme de la première valeur de couple et de la totalité du couple différentiel, le véhicule soit accéléré à la valeur d'accélération de référence, sans que ladite valeur d'enfoncement de la pédale soit modifiée.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 est une vue schématique illustrant un véhicule équipé d'un moteur et d'une pédale d'accélérateur, pour la mise en œuvre du procédé selon l'invention ;
- la figure 2 est une courbe qui montre l'allure d'une courbe correspondant à une consigne de couple du moteur de la figure 1 en fonction de l'enfoncement de la pédale d'accélérateur, selon un procédé de l'état de la technique ; et,
- la figure 3 illustre les forces résistantes appliquées au véhicule de la figure 1, et,
- la figure 4 est un schéma qui illustre un mode de réalisation du procédé selon l'invention.

DESCRIPTION DETAILLEE DES FIGURES

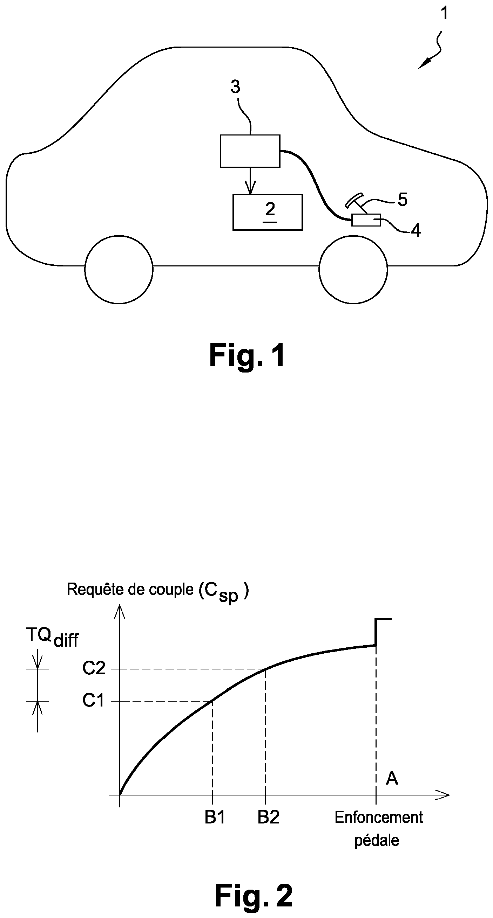

En référence à la figure 1, un véhicule automobile 1 comprend un moteur, par exemple un moteur à combustion interne du type à allumage commandé (fonctionnant à l'essence) ainsi qu'un dispositif de contrôle 3 du moteur 2, par exemple un calculateur. Ce dispositif de contrôle est en communication avec un capteur 4 de position d'une pédale d'accélérateur 5. Lorsqu'un conducteur (non représenté) du véhicule appuie sur la pédale d'accélérateur 5, la position de la pédale est mesurée par le capteur 4, et une valeur de la position est transmis au dispositif de contrôle. Ce dernier détermine, à partir d'un ensemble de paramètres comprenant au moins la valeur de position reçue et une valeur courante du régime du moteur, une valeur de consigne de couple $C_{sp}$ du moteur. Le dispositif de contrôle élabore en outre, à partir de la valeur de consigne de couple, une valeur de commande du moteur, par exemple une valeur de durée d'injection $T_{inj}$ de carburant, ou autre.

En référence à la figure 2, la consigne de couple (en ordonnée) est une fonction croissante de l'enfoncement de la pédale d'accélérateur (en abscisse), pour une valeur de régime moteur donnée. Par exemple, la consigne de couple varie continûment sur une grande partie de la plage d'enfoncement de la pédale réalisable, et peut présenter une discontinuité à la borne maximale 1 de la plage d'enfoncement. Bien entendu, d'autres allures de courbe, plus ou moins progressives, avec ou sans discontinuité, peuvent se présenter sans nuire à la généralité de l'invention.

Le couple moteur $C_{mot}$ qui est ensuite obtenu effectivement par le réglage des actionneurs du moteur suivant la consigne $C_{sp}$ imposée par le calculateur est transmis aux roues motrices du véhicule, par l'intermédiaire de la chaîne de transmission (c'est-à-dire par exemple par une boîte de vitesses manuelle ou automatique et un pont) du véhicule.

Plus précisément, la puissance $P_{mot}$ du moteur suit l'équation :

$$P_{mot} = C_{mot} \times \omega_{mot}$$

Avec $\omega_{mot}$ la vitesse angulaire de rotation du moteur, exprimée en rad/s La puissance $P_{roue}$ transmise aux roues suit l'équation :

$$P_{roue} = C_{roue} \times \omega_{roue} = r \times P_{mot}$$

Avec

$C_{roue}$ : le couple aux roues, exprimé en Nm ;
$\Omega_{roue}$ : la vitesse angulaire de rotation des roues, exprimée en rad/s ;
r : le rendement de la chaîne de transmission (sans unité).

Le couple aux roues suit alors l'équation :

$$C_{roue} = P_{roue} / \omega_{roue} = r \times P_{mot} / \omega_{roue} = r \times C_{mot} \times (\omega_{mot} / \omega r_{oue})$$

Il suit encore l'équation :

$$C_{roue} = (r / K) \times C_{mot}$$

Avec K le rapport de démultiplication (dit aussi rapport de réduction) de la chaîne de transmission, qui est une constante mécanique, exprimée sans unité, dépendant du rapport de boîte engagé.

On en déduit que la force d'entraînement du véhicule, ou force motrice $F_{motrice}$ suit l'équation :

$$F_{motrice} = (r / ( K \times R_{roue})) \times C_{mot}$$

Avec $R_{roue}$ le rayon des roues du véhicule, exprimé en m

Selon le principe fondamental de la dynamique, la force d'entraînement est liée à l'accélération du véhicule par l'équation :

$$m \times a = F_{motrice} - Fr_{esistante}$$

Avec

m : la masse du véhicule, exprimée en kg ;
a : l'accélération du véhicule, exprimée en m/s$^2$ ;
$F_{resistante}$ : les forces résistantes appliquées au véhicule, exprimées en N.

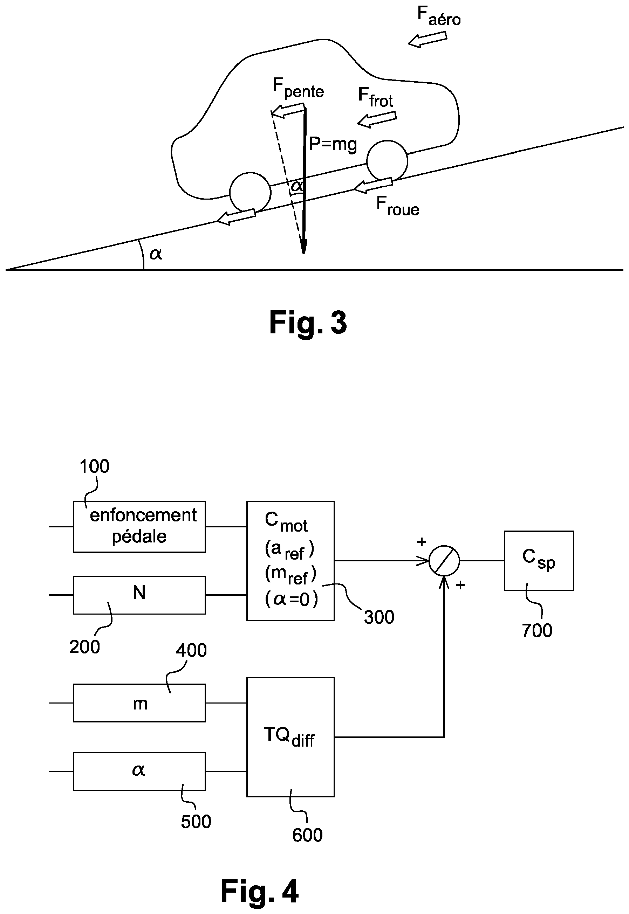

En référence à la figure 3, qui représente le véhicule sur une route présentant une pente montante d'angle $\alpha$ (exprimé par exemple en degrés), les forces résistantes qui s'appliquent au véhicule comportent :

1) La force aérodynamique $F_{aero}$, ou traînée, donnée par l'équation :

$$F_{aero} = ½ \times \rho \times V^2 \times S \times C_x$$

Où p désigne la masse volumique de l'air, V la vitesse du véhicule, S la surface frontale du véhicule et $C_x$ le coefficient de la traînée. Cette force ne dépend pas de la masse du véhicule ni de la pente.

2) La force de résistance au roulement $F_{roul}$ , donnée par l'équation :

$$F_{roul} = C_{RR} \times P$$

Où $C_{rr}$ désigne le coefficient de résistance des pneus (exprimé en kg / kg , ou usuellement en kg/t, donnée prédéterminée par des essais du fabricant), et P désigne le poids du véhicule que supporte le pneu).

La force de résistance au roulement suit donc aussi l'équation :

$$F_{roul} = C_{RR} \times m \times g$$

Avec m la masse du véhicule et kg (ou en tonne si le coefficient de résistance de pneus est exprimé en kg/t) le coefficient de pesanteur égal à 9,81 m/s$^2$ .

Contrairement à la force aérodynamique, la force de résistance au roulement dépend de la masse m du véhicule.

3) La force de gravité $F_{pente}$ , qui est une force résistante seulement si le véhicule se déplace dans le sens de la montée sur une route en pente. Cette force suit l'équation :

$$F_{pente} = m \times g \times \sin \alpha$$

Cette force dépend à la fois de la masse du véhicule et de la pente a. Dans le cas d'une route plate (ne présentant pas d'inclinaison) la force de gravité a une contribution nulle sur les forces résistantes du véhicule.

4) D'autres forces résistantes $F_{frot}$ telles que des forces de frottement internes au véhicule et notamment au moteur, ces forces n'étant pas ou peu dépendantes de la masse m du véhicule.

Le principe fondamental de la dynamique peut se réécrire sous la forme de l'équation suivante :

$$\text{(Equ.1)} \quad m \times a = (r / (K \times R_{roue})) \times C_{mot} - F_{aero} - F_{roul} - F_{pente} - F_{frot}$$

Comme il a déjà été évoqué plus haut, l'enfoncement de la pédale d'accélérateur issu de la volonté du conducteur est traduite par le calculateur du moteur, pour le régime courant N du moteur, en une consigne de couple moteur $C_{sp}$ puis en un couple moteur réel $C_{mot}$ qui permet d'obtenir une accélération a donnée, cette accélération étant reliée au couple par l'équation précédente, mais uniquement dans des conditions d'essais standardisés dans lesquels la masse du véhicule est égale à une valeur de masse de référence $m_{ref}$ prédéterminée et que la route présente une pente nulle.

En d'autres termes, l'accélération a est une accélération de référence $a_{ref}$ obtenue selon l'équation :

$$\text{(Equ.2)} \quad m_{ref} \times a_{ref} = (r / (K \times R_{roue})) \times C_{mot} - F_{aero} - C_{rr} \times m_{ref} \times g - F_{frot}$$

Cette accélération peut par exemple être obtenue par une première valeur d'enfoncement de la pédale d'accélérateur B1 (figure 2) et correspondant par exemple à une première valeur de couple moteur égale à la valeur C1 sur la figure 2.

Dans des conditions réelles d'utilisation du véhicule, dans lesquelles la masse m du véhicule est supérieure à la masse de référence et/ou la pente de la route $\alpha$ présente une valeur strictement positive, la force de résistance au roulement augmente (même si la pente est nulle) et/ou la force de gravité également.

Plus précisément, la force de résistance au roulement $F_{roul}$ augmente d'une valeur égale à $C_{rr} \times (m - m_{ref}) \times g$ ; la force de gravité $F_{pente}$ , qui était nulle dans les conditions de référence, devient égale à, ou augmente d'une valeur égale à $m \times g \times \sin \alpha$.

Pour une consigne de couple moteur identique à la valeur C1 qui a été déterminée pour la masse de référence du véhicule et sur une route plate, on comprend que l'accélération a obtenue réellement, si la position de la pédale d'accélérateur B1 ne change pas, est plus faible que l'accélération de référence qui avait été prévue.

L'accélération a réellement obtenue en tenant compte de la masse réelle plus élevée que la masse de référence et de la pente positive, si le couple moteur correspondant à une consigne inchangée, suit l'équation :

$$\text{(Equ.3)} \quad m_{ref} \times a_{ref} - m \times a = C_{rr} \times (m - m_{ref}) \times g + m \times g \times \sin \alpha = \Delta F$$

, équation dans laquelle $\Delta F$ désigne l'effort résistant supplémentaire, qui peut être déterminé en fonction de la connaissance de la pente $\alpha$ de la route et de la masse réelle du véhicule. Par exemple la pente peut être déterminée de manière classique grâce à des accéléromètres embarqués sur le véhicule, qui permettent de comparer l'accélération longitudinale du véhicule et sa seule composante horizontale. Par exemple, la masse du véhicule peut être déterminée selon l'enseignement de la publication FR-A1-2995399. Bien entendu, d'autres méthodes sont envisageables sans nuire à la généralité de l'invention, par exemple le procédé décrit dans la publication WO-A1-2006/033612.

L'accélération réelle obtenue pour le même enfoncement B1 de la pédale d'accélération serait alors seulement égale à :

$$a = (m_{ref} / m) \times a_{ref} - (\Delta F / m)$$

Comme déjà mentionné plus haut, dans les procédés de contrôle du moteur connus de l'état de la technique, le conducteur qui aurait au contraire la volonté de conserver l'accélération de référence prévue $a_{ref}$ serait alors naturellement incité à enfoncer davantage la pédale d'accélérateur, par exemple jusqu'à la position B2 de la figure 2 correspondant à une consigne de couple C2 apte à garantir la même accélération de référence $a_{ref}$. Cette valeur de couple C2 est liée à la valeur de couple de référence C1 comme on l'explique ci-après.

Les valeurs de couple C1,C2 sont conformes aux équations suivantes :

$$\text{(Equ.4)} \quad m_{ref} \times a_{ref} = (r / (K \times R_{roue})) \times C1 - F_{aero} - C_{rr} \times m_{ref} \times g - F_{frot}$$

Et

$$(\text{Equ.5}) \quad m \times a_{ref} = (r / ( K \times R_{roue})) \times C2 - F_{aero} - C_{rr} \times m_{ref} \times g - F_{frot} - \Delta F$$

On en déduit l'équation suivante :

$$(\text{Equ.6}) \quad (m - m_{ref}) \times a_{ref} = (r / ( K \times R_{roue})) \times (C2 - C1) - \Delta F$$

D'où encore :

$$(\text{Equ.7}) \quad C2 - C1 = (( K \times R_{roue}) / r ) \times [ (m - m_{ref}) \times a_{ref} + \Delta F ]$$

On appelle cet écart de couple C2 - C1 « couple différentiel » $TQ_{diff}$. Il correspond au couple supplémentaire qui est nécessaire pour vaincre d'une part les efforts résistants supplémentaires appliqués au véhicule ainsi que l'inertie supplémentaire du véhicule liée à sa masse.

Il résulte des équations précédentes que la valeur du couple différentiel $TQ_{diff}$ peut être déterminé à l'instant courant en fonction de la masse réelle du véhicule, qui peut différer de la masse de référence, et de la pente de la route parcourue, qui peut être montante. En utilisant l'équation 3, on réécrit l'équation 7 comme suit :

$$(\text{Equ.8}) \quad TQ_{diff} = (( K \times R_{roue}) / r ) \times [ (m - m_{ref}) \times a_{ref} +$$
$$C_{rr} \times (m - m_{ref}) \times g + m \times g \times \sin \alpha ]$$

Dans les procédés connus de l'état de la technique illustrés par la figure 2, la production de ce couple différentiel passe par un enfoncement supplémentaire de la pédale d'accélérateur, qui passe de la position B1 à la position B2. Il peut en résulter pour le conducteur une sensation de manque d'agrément du véhicule, qui est d'autant plus marquée que l'enfoncement supplémentaire de la pédale d'accélérateur est important, ce qui est le cas des petits moteurs.

En référence à la figure 4, le procédé de contrôle de consigne de couple selon l'invention permet de résoudre ce problème.

Il comprend des étapes successives qui sont réalisées de manière continue pendant le fonctionnement du véhicule. Le procédé comprend une première étape 100 dans laquelle le conducteur du véhicule enfonce la pédale d'accélérateur et le calculateur du moteur relève la valeur dudit enfoncement. Il comprend une étape 200 dans laquelle le calculateur relève la valeur courante du régime N moteur. Il comprend une étape 300 dans laquelle, en fonction dudit enfoncement et dudit régime, le calculateur détermine une première valeur de couple moteur $C_{mot}$ correspondant à la volonté d'accélérer du conducteur, c'est-à-dire à une accélération de référence $a_{ref}$ du véhicule qui est obtenue si la masse du véhicule est égale à la masse de référence et si la route sur laquelle se déplace le véhicule est plate. Cette valeur de couple est préétablie par des essais et stockée dans une mémoire du calculateur.

Le procédé comprend une étape 400 de détermination de la masse réelle m du véhicule. Par exemple, on peut déterminer ladite masse à chaque démarrage du moteur et à chaque arrêt du véhicule, de manière à pouvoir tenir compte par exemple de changements de masse qui interviennent lors de la montée de passagers ou d'un remplissage de coffre, et considérer la masse comme constante entre deux démarrages et/ou deux arrêts consécutifs.

Le procédé comprend une étape 500 de détermination de la pente $\alpha$ de la route sur laquelle le véhicule se déplace.

Le procédé comprend ensuite une étape 600 de détermination d'une valeur de couple différentiel $TQ_{diff}$ du moteur, qui correspond au couple supplémentaire que le moteur doit délivrer, en plus de la première valeur de couple moteur $C_{mot}$ issue de la volonté du conducteur, pour que le véhicule accélère réellement à la valeur de l'accélération de référence $a_{ref}$ correspondant à la volonté du conducteur.

Le couple $TQ_{diff}$ est calculé selon l'équation 8, lorsque les deux conditions suivantes sont réunies cumulativement : la pente $\alpha$ de la route est positive ou nulle, et la masse réelle m du véhicule est supérieure ou égale à la masse de référence $m_{ref}$.

En revanche, si la pente $\alpha$ est négative, on ne prend pas en compte la force motrice, ou force d'entraînement de la gravité dans le calcul du couple différentiel. En d'autres termes, on calcule ledit couple selon l'équation :

$$(\text{Equ.9}) \quad TQ_{diff} = ( ( K \times R_{roue} ) / r ) \times [ (m - m_{ref}) \times a_{ref} +$$
$$C_{rr} \times (m - m_{ref}) \times g ]$$

De la même manière, si la masse m est inférieure à la masse de référence, on ne prend pas davantage en compte la différence de masse dans le calcul du couple différentiel. En d'autres termes, on calcule ledit couple selon l'équation :

$$(\text{Equ.10}) \quad TQ_{diff} = ( ( K \times R_{roue} ) / r ) \times [ m \times g \times \sin \alpha ]$$

Enfin, dans le cas où la pente $\alpha$ est négative et la masse est inférieure à la masse de référence, on calculera le couple différentiel selon l'équation :

$$(\text{Equ.11}) \quad TQ_{diff} = 0$$

Le procédé comprend une étape 700 dans laquelle le calculateur du moteur détermine une valeur de consigne de couple $C_{sp}$ à fournir au total par le moteur pour l'entraînement du véhicule à l'accélération de référence conformément à la volonté du conducteur. Il se poursuit alors par une étape (non représentée) dans laquelle le calculateur pilote des actionneurs du moteur, par exemple pour régler une quantité de carburant à injecter dans le moteur pour la production du couple.

De cette façon, le procédé selon l'invention permet de compenser les effets d'une masse de véhicule plus élevée ou d'une pente montante sans qu'il soit besoin de modifier l'enfoncement de la pédale d'accélérateur pour obtenir l'accélération souhaitée.

Toutefois, on comprend des équations 9 à 11 que l'effet sur le véhicule d'une pente descendante et/ou d'une masse plus faible n'est pas prise en compte. Une compensation intégrale de ces effets pourrait être déconcertante pour le conducteur, plus particulièrement dans une pente descendante où il pourrait dans certains cas de figure constater une accélération non désirée et en cas de maintien de l'enfoncement de la pédale d'accélérateur.

Dans tous les cas, la valeur totale du couple qui est obtenue par le calcul selon les équations 8 à 12 est écrêtée à la valeur maximale du couple que le moteur peut physiquement délivrer au régime N du moteur considéré.

Dans un mode perfectionné de l'invention (non représenté par la figure 4), on peut pondérer la compensation de couple, c'est-à-dire le pourcentage de couple différentiel $TQ_{diff}$ qui est ajouté au couple, en fonction d'un mode de conduite sélectionné par le conducteur si le véhicule est équipé d'un bouton de sélection permettant un tel choix. Si le conducteur peut sélectionner une pluralité de modes de conduite, par exemple trois modes (économique, normal, sportif), on peut notamment déterminer la consigne de couple de l'étape 700 par les équations :

$$C_{sp} (\text{éco}) = C_{mot} + k(\text{éco}) \times TQ_{diff}$$

$$C_{sp} (\text{normal}) = C_{mot} + k(\text{normal}) \times TQ_{diff}$$

$$C_{sp} (\text{sport}) = C_{mot} + k(\text{sport}) \times TQ_{diff}$$

, dans lesquelles k(éco) , k(normal) et k(sport) désignent des coefficients compris entre 0 et 1 et conformes à l'inéquation :

$$0 < k(\text{éco}) < k(\text{normal}) < k(\text{sport}) < 1.$$

L'homme de métier pourra prévoir des variantes pour adapter le comportement du véhicule au mode de conduite recherché sans sortir du cadre de l'invention.

**Revendications**

**1.** Procédé de détermination de la consigne de couple ($C_{sp}$) d'un moteur de véhicule automobile, comprenant des étapes au cours desquelles :

- On détermine une valeur de l'enfoncement (B1) d'une pédale d'accélérateur du véhicule par un conducteur du véhicule ;
- On détermine une valeur du régime (N) du moteur ; et,
- On détermine ladite consigne de couple ($C_{sp}$) à partir d'un ensemble de paramètres comprenant au moins ladite valeur d'enfoncement (B1) de la pédale et ladite valeur de régime (N),

**CARACTERISE EN CE QUE**

ladite consigne de couple ($C_{sp}$) est déterminée comme étant égale à la somme

- d'une première valeur de couple ($C_{mot}$) moteur, déterminée en fonction de la valeur de l'enfoncement (B1) de la pédale d'accélérateur par le conducteur et du régime (N) du moteur, ladite première valeur étant apte à accélérer le véhicule à une valeur d'accélération de référence ($a_{ref}$) prédéterminée lorsque la masse du véhicule est égale à une masse de référence ($mr_{ef}$) prédéterminée et que le véhicule se déplace sur une route présentant une pente ($\alpha$) nulle ; et,
- de tout ou partie d'une valeur de couple différentiel ($TQ_{diff}$), déterminé en fonction de la masse courante réelle (m) du véhicule et de la pente courante réelle ($\alpha$) de la route sur laquelle le véhicule se déplace, ledit couple différentiel ($TQ_{diff}$) étant déterminé de manière que, lorsque le couple moteur est égal à la somme de la première valeur de couple ($C_{mot}$) et de la totalité du couple différentiel ($TQ_{diff}$), le véhicule soit accéléré à la valeur d'accélération de référence ($a_{ref}$), sans que ladite valeur d'enfoncement de la pédale (B1) soit modifiée.

2. Procédé selon la revendication 1, dans lequel la valeur du couple différentiel ($TQ_{diff}$) est déterminée par calcul selon l'équation :

$$TQ_{diff} = ( ( K \times R_{roue}) / r ) \times [ (m - m_{ref}) \times a_{ref} +$$
$$C_{rr} \times (m - m_{ref}) \times g + m \times g \times \sin \alpha ]$$

Avec :

K : le rapport de démultiplication de la chaîne de transmission du véhicule
$R_{roue}$ : le rayon des roues du véhicule
r : le rendement de la chaîne de transmission du véhicule m : la masse du véhicule
$m_{ref}$ : la masse de référence du véhicule
$a_{ref}$: l'accélération de référence du véhicule
$C_{rr}$ : le coefficient de résistance des pneus du véhicule g : le coefficient de pesanteur égal à 9,81 m/s$_2$
$\alpha$ : la pente de la route dans le sens de déplacement du véhicule

3. Procédé selon l'une quelconque des revendications précédentes, dans lequel la proportion (k(éco),k(normal),k(sport)) de la valeur du couple différentiel ($TQ_{diff}$) qui est ajoutée à la première valeur de couple ($C_{mot}$) est déterminée en fonction d'un mode de conduite du véhicule sélectionné par le conducteur.

4. Procédé selon l'une quelconque des revendications précédentes, dans lequel si le calcul de ladite somme est strictement supérieur au couple maximum que le moteur peut fournir au régime (N) considéré, alors on remplace ladite somme par le couple maximum dans la détermination de la consigne de couple (Csp).

5. Procédé selon l'une quelconque des revendications précédentes, **caractérisé en ce que** chaque accélération de référence ($a_{ref}$) du véhicule correspondant à un enfoncement donné (B1) de la pédale d'accélérateur et à un régime (N) moteur donné est déterminée selon l'équation :

$$m_{ref} \times a_{ref} = (r / ( K \times R_{roue})) \times C_{mot} - F_{resistante}$$

Avec :

r : le rendement de la chaîne de transmission du véhicule K : le rapport de démultiplication de la chaîne de transmission du véhicule

$R_{roue}$ : le rayon des roues du véhicule

$F_{resistante}$ : la somme des forces résistantes appliquées au véhicule, la valeur desdites forces étant déterminée par des essais préalables du véhicule mis à la masse de référence ($m_{ref}$), sur une route à pente ($\alpha$) nulle, et avec une accélération nulle correspondant à la vitesse (V) constante du véhicule au régime (N) du moteur et pour le rapport de démultiplication (K) considéré.

6. Procédé selon l'une quelconque des revendications précédentes, dans lequel la masse (m) du véhicule est déterminée à chaque démarrage du moteur et/ou à chaque arrêt du véhicule.

7. Procédé selon l'une quelconque des revendications précédentes, dans lequel la pente ($\alpha$) de la route sur laquelle le véhicule se déplace est déterminée de manière continue, grâce à des accéléromètres embarqués à bord du véhicule.

8. Procédé selon la revendication 2, dans lequel ledit calcul de couple différentiel est effectué selon ladite équation uniquement si les deux conditions suivantes sont réalisées simultanément :

- La masse (m) du véhicule est supérieure ou égale à la masse de référence ($m_{ref}$) ; et,
- La pente ($\alpha$) de la route parcourue par le véhicule est positive ou nulle, dans le sens de déplacement du véhicule.

**Patentansprüche**

1. Verfahren zur Bestimmung des Drehmomentsollwerts ($C_{sp}$) eines Kraftfahrzeugmotors, das Schritte enthält, während denen:

- ein Wert des Niederdrückens (B1) eines Gaspedals des Fahrzeugs durch einen Fahrer des Fahrzeugs bestimmt wird;
- ein Wert der Drehzahl (N) des Motors bestimmt wird; und
- der Drehmomentsollwert ($C_{sp}$) ausgehend von einer Einheit von Parametern bestimmt wird, die mindestens den Niederdrückwert (B1) des Pedals und den Drehzahlwert (N) enthält,

**dadurch gekennzeichnet, dass**
der Drehmomentsollwert ($C_{sp}$) bestimmt wird als gleich der Summe

- eines ersten Motordrehmomentwerts ($C_{mot}$) , der abhängig vom Wert des Niederdrückens (B1) des Gaspedals durch den Fahrer und von der Drehzahl (N) des Motors bestimmt wird, wobei der erste Wert das Fahrzeug mit einem vorbestimmten Bezugsbeschleunigungswert ($a_{ref}$) beschleunigen kann, wenn die Masse des Fahrzeugs gleich einer vorbestimmten Bezugsmasse ($m_{ref}$) ist und das Fahrzeug sich auf einer Straße mit einer Neigung ($\alpha$) null bewegt; und
- des ganzen oder eines Teils eines Differenzmomentwerts ($TQ_{diff}$), der abhängig von der realen aktuellen Masse (m) des Fahrzeugs und der realen aktuellen Neigung ($\alpha$) der Straße bestimmt wird, auf der das Fahrzeug sich bewegt, wobei das Differenzmoment ($TQ_{diff}$) so bestimmt wird, dass, wenn das Motordrehmoment gleich der Summe des ersten Drehmomentwerts ($C_{mot}$) und der Gesamtheit des Differenzmoments ($TQ_{diff}$) ist, das Fahrzeug mit dem Bezugsbeschleunigungswert ($a_{ref}$) beschleunigt wird, ohne dass der Niederdrückwert des Pedals (B1) verändert wird.

2. Verfahren nach Anspruch 1, wobei der Wert des Differenzmoments ($TQ_{diff}$) durch Rechnen gemäß der Gleichung bestimmt wird:

$$TQ_{diff} = ((K \times R_{roue})/r) \times [(m-m_{ref}) \times a_{ref} + C_{rr} \times (m-m_{ref}) \times g + m \times g \times \sin \alpha]$$

mit:

K: dem Übersetzungsverhältnis des Antriebsstrangs des Fahrzeugs
$R_{roue}$: dem Radius der Räder des Fahrzeugs
r: der Leistung des Antriebsstrangs des Fahrzeugs

m: der Masse des Fahrzeugs

$m_{ref}$: der Bezugsmasse des Fahrzeugs

$a_{ref}$: der Bezugsbeschleunigung des Fahrzeugs

$C_{rr}$: dem Widerstandskoeffizienten der Reifen des Fahrzeugs

g: dem Schwerkraftkoeffizienten gleich 9,81 m/s$_2$

$\alpha$: der Neigung der Straße in der Bewegungsrichtung des Fahrzeugs.

3. Verfahren nach einem der vorhergehenden Ansprüche, wobei der Anteil (k(éco),k(normal),k(sport)) des Werts des Differenzmoments ($TQ_{diff}$), der zum ersten Drehmomentwert ($C_{mot}$) hinzugefügt wird, abhängig von einer vom Fahrer ausgewählten Fahrweise des Fahrzeugs bestimmt wird.

4. Verfahren nach einem der vorhergehenden Ansprüche, wobei, wenn die Berechnung der Summe strikt höher ist als das maximale Drehmoment, das der Motor bei der betrachteten Drehzahl (N) liefern kann, die Summe durch das maximale Drehmoment bei der Bestimmung des Drehmomentsollwerts ($C_{sp}$) ersetzt wird.

5. Verfahren nach einem der vorhergehenden Ansprüche, **dadurch gekennzeichnet, dass** jede Bezugsbeschleunigung ($a_{ref}$) des Fahrzeugs entsprechend einem gegebenen Niederdrücken (B1) des Gaspedals und einer gegebenen Motordrehzahl (N) gemäß der Gleichung bestimmt wird:

$$m_{ref} \times a_{ref} = (r/(K \times R_{roue})) \times C_{mot} \; F_{resistante}$$

mit:

r: der Leistung des Antriebsstrangs des Fahrzeugs

K: dem Übersetzungsverhältnis des Antriebsstrangs des Fahrzeugs

$R_{roue}$: dem Radius der Räder des Fahrzeugs

$F_{resistante}$: der Summe der an das Fahrzeug angewendeten Widerstandskräfte, wobei der Wert der Kräfte durch vorhergehende Tests des auf die Bezugsmasse ($m_{ref}$) gebrachten Fahrzeugs, auf einer Straße mit einer Neigung ($\alpha$) null, und mit einer Beschleunigung null entsprechend der konstanten Geschwindigkeit (V) des Fahrzeugs bei der Drehzahl (N) des Motors und für das betreffende Übersetzungsverhältnis (K), bestimmt wird.

6. Verfahren nach einem der vorhergehenden Ansprüche, wobei die Masse (m) des Fahrzeugs bei jedem Start des Motors und/oder bei jedem Anhalten des Fahrzeugs bestimmt wird.

7. Verfahren nach einem der vorhergehenden Ansprüche, wobei die Neigung ($\alpha$) der Straße, auf der das Fahrzeug sich bewegt, durchgehend mit Hilfe von an Bord des Fahrzeugs befindlichen Beschleunigungsmessern bestimmt wird.

8. Verfahren nach Anspruch 2, wobei die Berechnung des Differenzmoments nur dann gemäß der Gleichung ausgeführt wird, wenn die zwei folgenden Bedingungen gleichzeitig erfüllt sind:

- die Masse (m) des Fahrzeugs ist größer als die oder gleich der Bezugsmasse ($m_{ref}$); und
- die Neigung ($\alpha$) der vom Fahrzeug befahrenen Straße ist positiv oder null, in Bewegungsrichtung des Fahrzeugs.

**Claims**

1. Method for determining the torque setpoint ($C_{sp}$) of a motor vehicle engine, comprising steps during which:

- a value of the depression (B1) of an accelerator pedal of the vehicle by a driver of the vehicle is determined;
- a value of the speed (N) of the engine is determined; and
- said torque setpoint ($C_{sp}$) is determined from a set of parameters comprising at least said value of depression (B1) of the pedal and said value of speed (N), **characterized in that**

said torque setpoint ($C_{sp}$) is determined as being equal to the sum:

- of a first value of engine torque ($C_{mot}$), determined as a function of the value of the depression (B1) of the accelerator pedal by the driver and of the speed (N) of the engine, said first value being able to accelerate the vehicle at a predetermined value of reference acceleration ($a_{ref}$) when the mass of the vehicle is equal to a predetermined reference mass ($m_{ref}$) and when the vehicle is travelling on a road having a zero slope ($\alpha$); and

- of all or some of a value of differential torque ($TQ_{diff}$), determined as a function of the real current mass (m) of the vehicle and of the real current slope ($\alpha$) of the road on which the vehicle is travelling, said differential torque ($TQ_{diff}$) being determined such that, when the engine torque is equal to the sum of the first value of torque ($C_{mot}$) and of all of the differential torque ($TQ_{diff}$), the vehicle is accelerated at the value of reference acceleration ($a_{ref}$), without said value of depression of the pedal (B1) being modified.

2. Method according to Claim 1, wherein the value of the differential torque ($TQ_{diff}$) is determined by calculation using the equation:

$$TQ_{diff} = ( ( K \times R_{wheel}) / r ) \times [ (m-m_{ref}) \times a_{ref} + C_{rr} \times (m - m_{ref}) \times g + m \times g \times \sin \alpha ]$$

with:

K: the step-down ratio of the drivetrain of the vehicle $R_{wheel}$: the radius of the wheels of the vehicle
r: the efficiency of the drivetrain of the vehicle
m: the mass of the vehicle
$m_{ref}$: the reference mass of the vehicle
$a_{ref}$: the reference acceleration of the vehicle
$C_{rr}$: the coefficient of resistance of the tyres of the vehicle
g: the coefficient of gravity equal to 9.81 m/s$^2$
$\alpha$: the slope of the road in the direction of travel of the vehicle

3. Method according to either one of the preceding claims, wherein the proportion (k(eco),k(normal),k(sport)) of the value of the differential torque ($TQ_{diff}$) that is added to the first value of torque ($C_{mot}$) is determined as a function of a driving mode of the vehicle that is selected by the driver.

4. Method according to any one of the preceding claims, wherein, if said sum is strictly greater than the maximum torque that the engine can provide at the speed (N) in question, then said sum is replaced by the maximum torque in the determination of the torque setpoint ($C_{sp}$).

5. Method according to any one of the preceding claims, **characterized in that** each reference acceleration ($a_{ref}$) of the vehicle corresponding to a given depression (B1) of the accelerator pedal and to a given engine speed (N) is determined using the equation:

$$m_{ref} \times a_{ref} = (r / ( K \times R_{wheel})) \times C_{mot} - F_{resistive}$$

with:

r: the efficiency of the drivetrain of the vehicle
K: the step-down ratio of the drivetrain of the vehicle
$R_{wheel}$: the radius of the wheels of the vehicle $F_{resistive}$: the sum of the resistive forces applied to the vehicle, the value of said forces being determined by prior tests of the vehicle set to the reference mass ($m_{ref}$), on a road with zero slope ($\alpha$), and with a zero acceleration corresponding to the constant speed (V) of the vehicle at the speed (N) of the engine and for the step-down ratio (K) in question.

6. Method according to any one of the preceding claims, wherein the mass (m) of the vehicle is determined each time the engine is started and/or each time the vehicle is stopped.

7. Method according to any one of the preceding claims, wherein the slope ($\alpha$) of the road on which the vehicle is travelling is determined in a continuous manner, by virtue of accelerometers installed on board the vehicle.

8. Method according to Claim 2, wherein said calculation of differential torque is performed using said equation only if the following two conditions are met simultaneously:

   - the mass ($m$) of the vehicle is greater than or equal to the reference mass ($m_{ref}$) ; and
   - the slope ($\alpha$) of the road travelled over by the vehicle is positive or zero, in the direction of travel of the vehicle.

**Fig. 1**

**Fig. 2**

**Fig. 3**

**Fig. 4**

**EP 3 727 970 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2995399 A1
- EP 1045121 A1
- FR 2875200 A1
- DE 19933010 A1
- US 4720793 A
- EP 1348851 A1
- WO 2006033612 A1